Europäisches Patentamt

(19) European Patent Office

Office européen des brevets

(11) Publication number: **0 037 222**
**B1**

## (12) EUROPEAN PATENT SPECIFICATION

(45) Date of publication of patent specification: **25.04.84**

(21) Application number: **81301200.2**

(22) Date of filing: **20.03.81**

(51) Int. Cl.³: **H 01 T 1/14, H 01 T 5/04, H 02 H 9/06**

(54) Line protector for a communications circuit.

(30) Priority: **27.03.80 US 134744**

(43) Date of publication of application:
**07.10.81 Bulletin 81/40**

(45) Publication of the grant of the patent:
**25.04.84 Bulletin 84/17**

(84) Designated Contracting States:
**DE FR GB SE**

(56) References cited:
**DE - A - 2 740 695**
**US - A - 3 755 715**
**US - A - 3 975 664**
**US - A - 4 133 019**
**US - A - 4 158 869**

(73) Proprietor: **Reliance Electric Company**
**29325 Chagrin Blvd.**
**Cleveland, Ohio 44122 (US)**

(72) Inventor: **Baumbach, Bertram William**
**112 North Waterman Avenue**
**Arlington Heights Illinois (US)**

(74) Representative: **Evershed, Michael et al,**
**Marks & Clerk Alpha Tower Suffolk Street**
**Queensway**
**Birmingham B1 ITT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Line protector for a communications circuit

This invention relates to protectors of the general type used in central office telephone switching equipment. Devices of this type serve to protect the inside switching and like equipment from damage as a result of overvoltage and overcurrent conditions that may occur on the outside lines. Frequently these devices are referred to in the art as central office protectors.

One such type of protector is shown in U.S.—A—3,975,664 issued August 17, 1976. The protector shown and described in that patent provides a relatively fast operation on sensing and overvoltage or overcurrent condition on the line. A gas tube surge arrester is utilized to provide a discharge path to ground from each side of the line. In an overcurrent condition in the line a solder element is melted resulting in a spring-biased element being caused to engage the ground electrode of the gas tube so that a direct metallic path is provided from the line to ground. Furthermore, the device of the aforesaid patent is relatively small and compact, is simple and inexpensive to manufacture, and at the same time is capable of being mounted in a substantially standard base and housing. The device also has a five pin base construction which enables the unit to be plugged into known types of terminal blocks for central office protectors.

While a device of the foregoing type has proven to be satisfactory, a problem may exist if the gas tube within the device becomes vented to atmosphere. In such case protection would be lost because the electrodes of the gas tube would then be exposed to atmosphere. This would result in the voltage breakdown of the gas tube being far in excess of that suitable for line protection.

It will be appreciated that a gas tube surge arrester which has failed by reason of leakage will be difficult to detect simply because the line to which it is connected continues to operate properly. Accordingly, it is desirable to provide some type of air gap as a back up protection arrangement in the event of failure of the gas tube due to leakage. Line protectors having gas tube surge arresters and back up air gap secondary arresters are known, but in most cases the devices use numerous special parts which results in an increased cost of manufacture over standard central office protector devices.

An object of this invention is to provide a new and improved line protector for the foregoing type that provides a secondary air gap protection feature while at the same time retaining a number of pre-existing parts. Such an arrangement aids in reducing the manufacturing costs of the protector.

A further object of this invention is to provide a line protector of the type stated which maintains its characteristic of being able to be plugged into a known type of terminal board yet at the same time provides secondary or back up protection.

According to this invention there is provided a line protector for a communications circuit comprising an insulating base, line pins projecting from said base, a line terminal electrically connected to said line pins, an additional terminal, a ground pin connected to said additional terminal, said ground pin also projecting from said base, said ground pin and additional terminal being electrically insulated from said line terminal and said line pins, a gas tube surge arrester having a line electrode and a ground electrode spaced therefrom to define a primary arc gap, said line electrode being electrically connected to said line terminal and said ground electrode being electrically connected to said additional terminal, a ground contact seated on said base and in electrical contact with said ground pin, and insulator means defining a spacing between a part of said line terminal that is in close proximity with said base and said ground contact, said insulator means being a sheet structure overlying said ground contact and disposed against said base and having perforation means at which a secondary arc gap is provided between said terminal part and said ground contact, said line pins projecting through said insulator means and also clinching said line terminal, said insulator means, and said ground contact to said base, and said secondary arc gap being an air gap having a rated breakdown voltage that is greater than the breakdown voltage of the primary arc gap but is less than the breakdown voltage of the primary arc gap if the gas has leaked from the gas tube.

In a typical construction the gap between the electrodes of the gas tube is of the order of 0.030 inches (0.762 mm) and results in a breakdown voltage of the gas tube of approximately 300 to 600 volts. Should the inert gas of the tube become vented to atmosphere, this breakdown voltage could exceed 3000 volts, which is entirely unsatisfactory for surge voltage protection. However, under such leakage conditions the secondary air gap comes into play and provides back-up protection. The breakdown voltage of the secondary or air gap should preferably not exceed about 1600 volts, but the air gap breakdown voltage should also have a controlled lower limit of about 700 volts. Such controlled lower limit is necessary in order to prevent the air gap from firing in the range of about 300 to 600 volts, namely the normal range of operation of a satisfactorily functioning gas tube.

This invention will now be described in more detail by way of example with reference to the accompanying drawings in which:—

Fig. 1 is a simplified schematic diagram illustrating a telephone line pair with a protector connected to each side of the line;

Fig. 2 is a side elevational view of the protector, partially broken away and in section;

Fig. 3 is a fragmentary sectional view taken along line 3—3 of Fig. 2;

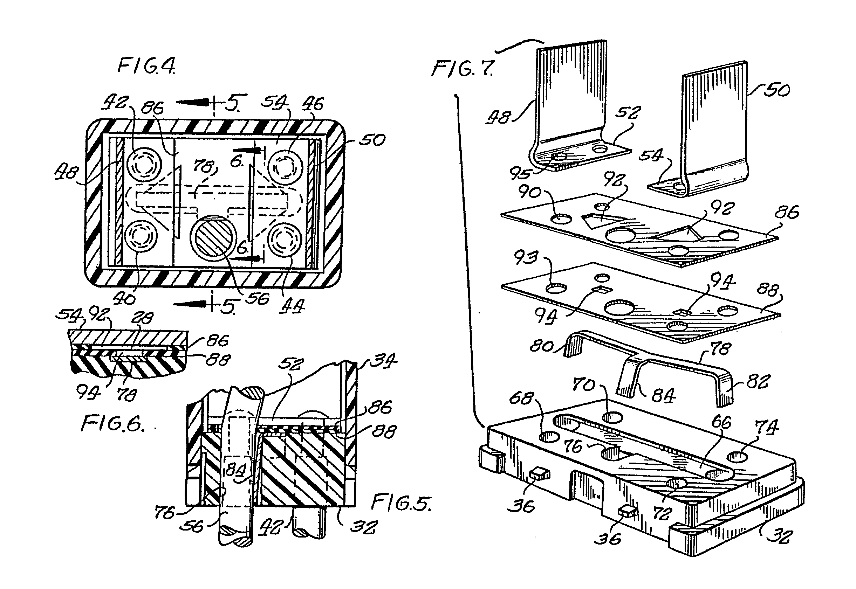

Fig. 4 is a sectional view taken along line 4—4 of Fig. 2;

Fig. 5 is a fragmentary sectional view taken along line 5—5 of Fig. 4;

Fig. 6 is a fragmentary sectional view taken along line 6—6 of Fig. 4; and

Fig. 7 is an exploded fragmentary perspective view of a portion of the protector.

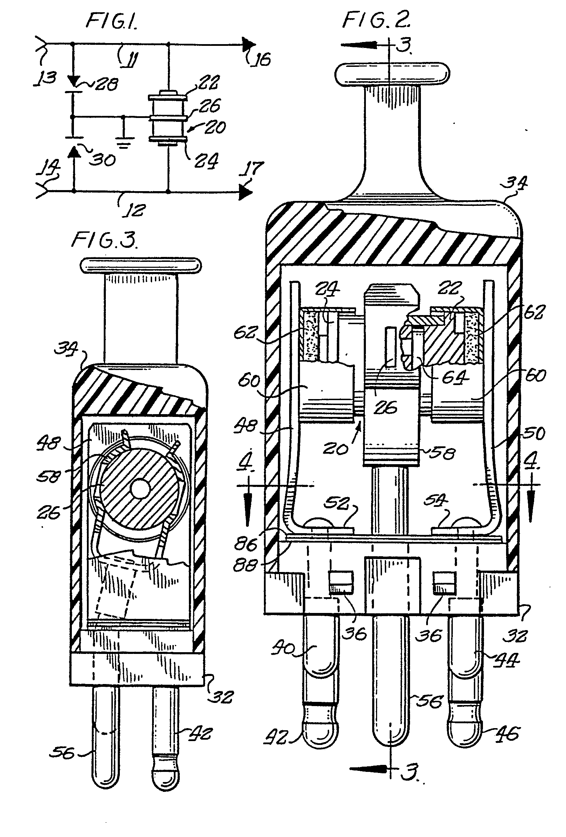

Referring now to Fig. 1 there is shown a circuit diagram of the protector connected across a telephone line pair. The telephone line pair includes a first line 11 and a second line 12 adapted for connections to outside telephone lines through terminals 13, 14. The outside lines (i.e. the incoming lines) are connected to inside central office equipment through terminals 16, 17. The protector is connected across the lines 11, 12 to provide a primary gas tube surge arrester 20 and a secondary air gap surge arrester in the event of failure of gas tube due to venting to atmosphere. The gas tube surge arrester 20 is preferably of the three electrode type and comprises a body with first and second line electrodes 22, 24 connected respectively to lines 11, 12, and a center intermediate electrode 26 connected to ground. As will be described more fully hereafter, there is an arc gap between each line electrode 22, 24 and the ground electrode 26 that serves to provide surge voltage protection in the normal operating range of the gus tube. Under such conditions a voltage surge on either line 11 or 12 will arc across the associated line electrode 22 or 24 to the ground electrode 26 and hence to ground. Thus, the gas tube 20 provides a voltage breakdown means in the circuit between each line and ground to form a high impedance at a voltage below a predetermined value and a low impedance at a voltage above a predetermined value. However, upon failure of the gas tube due to venting, back-up protection is provided by secondary air gaps 28, 30 which provide for arc discharge to ground for transient voltages appearing on either line 11 or line 12. In a typical arrangement, the gaps 28, 30 are each preferably about 0.006 inches (0.152 mm) in width.

The line protector comprises a dielectric housing with a base 32 and a shell 34, both of which are of dielectric plastic material. The lower end of the shell 34 is open to receive the base 32, and the base has nibs 36 on opposed sides that snap fit with openings in the shell 34. The base 32 is formed with holes to receive pins that are disposed in an array suitable for plug-in mounting of the protector on a terminal board of conventional construction. Such terminal board may typically have six pin sockets disposed in a generally rectangular pattern in addition to a dummy or polarizing pin socket. The base 32 receives and supports a pin configuration that is compatible with the aforesaid six pin socket. More particularly, the base receives four line pins 40, 42, 44, 46 that project from the base and have respectively parallel axes that intersect the base to define substantially the four corners of a rectangle. The longer pins 42, 46 are respectively connected to the incoming lines while the shorter pins 40, 44 are respectively connected to the central office equipment. The line pins 40, 42 are in one of the line circuits 12 while the pins 44, 46 are in the other line circuit 11.

Provided within the housing are L-shaped metallic line terminals 48, 50. These line terminals 48, 50 respectively include base portions 52, 54 to which the several line pins are clinched. More specifically, line pins 40 and 42 are clinched to the base portion 52 while line pins 44, 46 are clinched to the base portion 54. Therefore, the respective line terminals 48, 50 provide electrical continuity between the respective pairs of line-pins 40, 42 or 44, 46, as the case may be. A fifth or ground pin 56 projects from the base 32 intermediate the pins 40, 44. The part of the pin 56 that projects through the base 32 has a central axis that is parallel to the axes of the four pins 40, 42, 44, 46, and the path between the pins 40, 42 constitutes the shorter dimension of the rectangle whose corners are at the axes of the four pins 40, 42, 44, 46.

The part of the ground pin 56 that is within the housing is bent to project toward the central region of the housing, and at one end has an intermediate terminal in the form of a U-shaped metallic clip 58 secured thereto. The opposite legs of the U-clip are slotted to receive the rim of the ground electrode 26. The clip 58 constitutes, in effect, a holder for the body of the gas tube 20 to support the gas tube in spaced relation to the base. An electrically conductive structure connects each of the end electrodes 22, 24 of the gas tube to a respective pair of line terminal pins. For this purpose caps 60, 60 receive the respective end electrodes 22, 24, the caps also receiving solder pellets 62, 62. The terminals 48, 50 are resilient to provide a spring bias against the caps 60, 60 to press them toward the clip 58. In the normal operation of the protector, the solder pellets 62, 62 prevent contact of the caps 60, 60 with the edges of the clip 58. However, in an overcurrent condition on either line one or both of the solder pellets 62, 62 will melt, thereby causing one or both of the line terminals 48, 50 to press one or both of the caps 60, 60 against the edge of the clip 58, thereby grounding the line through the ground pin 56.

Since the gas tube 20 is of the three electrode type, there is an arc gap 64 (Fig. 2) between each end electrode 22 or 24 and center electrode 26. When the gas tube is functioning properly this arc gap is preferably of the order of 0.030 inches (0.762 mm) and typically results in a breakdown voltage in the range of about 300 to 600 volts. Consequently, in an overvoltage condition on either line 11 or 12, there will be arc across the corresponding arc gap 64 resulting in a discharge to ground. However, if the gas tube has failed due to leakage of gas therefrom, an excessive voltage would be required to provide a breakdown across the gap 64; hence the present invention provides for secondary or back-up protection.

Formed on the inside base of the base 32 is an elongated slot 66 (Fig. 7) the opposite ends of which terminate approximately midway between holes 68, 70, 72, 74 that receive the respective pins 40, 42, 44, 46. The slot 66 also opens into a hole 76 for the ground pin 56. Positioned within the slot 66 is a resilient metallic ground contact 78 bent at its ends to form tabs 80, 82 which lodge within the slot 66, engaging the end walls thereof. The ground contact 78 also has a center tab 84 that fits within the hole 76 so as to engage the ground pin 56, as best seen in Fig. 5.

Interposed between the ground contact 78 and the base portions 52, 54 are insulating means in the form of sheets 86, 88 of mica or the like. The mica sheet 86 has a hole 90 which is aligned with a hole 93 in the sheet 88, the holes 90, 93 being also aligned with the hole 68 and a hole 95 in the terminal base 52. The aligned holes 68, 93, 90, 95 receive the pin 40. As will be seen from Fig. 7 a like set of aligned holes through the insulating sheet 86, 88 and the terminal bases, 52, 54 is provided for each of the several other line pins and the ground pin 56. Thus, the sheets 86, 88 and the contact 78 are clinched by the line pins between the contact base portions 52, 54 and the dielectric insulating base 32.

The insulating sheets 86, 88 each have perforations 92, 94 at which the secondary air gap 28 (Fig. 6) is established between the terminal base 54 and the ground contact 78. It will be understood that in like manner the air gap 30 is established between the terminal base 52 and the ground contact 78, In a preferred embodiment of the invention, each of the insulating sheets 86, 88 is approximately 0.003 inches (0.076 mm) in thickness so as to establish secondary air gaps 28, 30 of approximately 0.006 inches (0.152 mm) in width.

It will be noted that the perforation 92 is of a different peripheral size than the perforation 94. By way of example but not of limitation, the perforation 92 may be trapezoidal shaped whereas the perforation 94 may be square shaped. In any event, by having perforations of different sizes, the leakage path between the ground contact 78 and the terminal base 52 or 54, as the case may be, is reduced, thereby preventing under high humidity conditions, a discharge across the secondary gaps at voltages at or near the breakdown voltage of a properly functioning gas tube.

## Claims

1. A line protector for a communications circuit comprising an insulating base (32), line pins (40, 42; 44, 46) projecting from said base, a line terminal (48, 50) electrically connected to said line pins, an additional terminal (58), a ground pin (56) connected to said additional terminal, said ground pin also projecting from said base, said ground pin and additional terminal being electrically insulated from said line terminal and said line pins, a gas tube surge arrester (20) having a line electrode (22, 24) and a ground electrode (26) spaced therefrom to define a primary arc gap, said line electrode being electrically connected to said line terminal and said ground electrode being electrically connected to said additional terminal, a ground contact (78) seated on said base and in electrical contact with said ground pin characterized by insulator means (86, 88) defining a spacing between a part (52, 54) of said line terminal that is in close proximity with said base and said ground contact (78), said insulator means being a sheet structure overlying said ground contact and disposed against said base and having perforation means (92, 94) at which a secondary arc gap (28, 30) is provided between said terminal part and said ground contact, said line pins projecting through said insulator means and also clinching said line terminal, said insulator means, and said ground contact to said base, and said secondary arc gap being an air gap having a rated breakdown voltage that is greater than the breakdown voltage of the primary arc gap but is less than the breakdown voltage of the primary arc gap if the gas has leaked from the gas tube.

2. A line protector according to claim 1 in which said insulator means comprises two sheets (86, 88) of insulating material, each of the two sheets having a perforation, the perforations being of different sizes and constituting said perforation means.

3. A line protector according to any one of claims 1—2 in which said terminal in generally L-shaped and said terminal part is the base portion of the L.

4. A line protector according to any of claims 1—3 in which said base has a slot (66) for receiving said ground contact and said ground pin has a part thereof in said slot for electrical connection with said ground contact.

## Patentansprüche

1. Leitungsschutz für eine Fernmeldeschaltung, mit einer isolierenden Basis (32), mit von der Basis abstehenden Leiter-Anschlußstiften (40, 42; 44, 46), einem elektrisch mit den Leiter-Anschlußstiften verbundenen Leiter-Anschlußelement (48, 50) einem zusätzlichen Anschlußelement (58), einem mit dem zusätzlichen Anschlußelement verbundenen Masse-Anschlußstift, der ebenfalls von der Basis absteht, wobei der Masse-Anschlußstift und das zusätzliche Anschlußelement elektrisch von dem Leiter-Anschlußelement und den Leiter-Anschlußstiften isoliert ist, mit einem Gasrohr-Überspannungsableiter (20), der eine Leiterelektrode (22, 24) und eine hiervon beabstandete Masseelektrode (26) zur Festlegung eines ersten Lichtbogen-Spaltes besitzt, wobei die Leiterelektrode elektrisch an das Leiter-Anschlußelement, und die Masseelektrode elektrisch an das zusätzliche Anschlußelement angeschlossen ist, mit einem auf der Basis angeordneten Masse-Kontakt (78), der sich in elektrischem Kontakt mit dem Masse-Anschlußstift befindet, dadurch gekennzeichnet, daß Isolationselemente (86, 88) einen Zwischenraum zwischen einem in geringem Abstand von der Basis geführten Teil (52, 54) des Leiter-Anschlußelements und dem Masse-Kontakt (78) festlegen, daß die Isolationselemente (86, 88) als Schichtstruktur den Masse-Kontakt überlagern und gegen die Basis anliegen und eine Perforationsanordnung (92, 94) aufweisen, an denen ein zweiter Lichtbogen-Spalt (28, 30) zwischen dem Teil (52, 54) des Anschluß-Elements und dem Masse-Kontakt vorgesehen ist, daß die Leiter-Anschlußstifte durch die Isolationselemente hindurchragen und das Leiter-Anschlußelement, die Isolations-elemente und den Masse-Kontakt gegen die Basis andrücken, und daß der zweite Lichtbogen-Spalt (28, 30) als Luftspalt mit einer Nenn-Durchbruchsspannung ausgebildet ist, die größer ist als die Durchbruchsspannung des ersten Lichtbogen-Spalts, die jedoch kleiner ist als die Durchbruchsspannung des ersten Lichtbogen-Spalts, wenn das Gas aus dem Gasrohr entwichen ist.

2. Leitungsschutz nach Anspruch 1, dadurch gekennzeichnet, daß die Isolationselemente zwei Schichten (86, 88) aus Isolationsmaterial enthalten, daß jede der beiden Schichten Perforationen aufweist, daß die Perforationen unterschiedliche Größen besitzen und die Perforationsanordnung bilden.

3. Leitungsschutz nach einem der Ansprüche 1 und 2, dadurch gekennzeichnet, daß das Anschlußelement im wesentlichen L-förmig ausgebildet ist, und daß der Teil (52, 54) des Anschlußelements von dem Basisabschnitt der L-Form gebildet ist.

4. Leitungsschutz nach einem der Ansprüche 1 bis 3, dadurch gekennzeichnet, daß die Basis einen Spalt (66) zur Aufnahme des Masse-Kontakts besitzt, und daß ein Teil des Masse-Anschlußstiftes in dem Spalt zur Verbindung mit dem Masse-Kontakt liegt.

**Revendications**

1. Protecteur de ligne pour un circuit de télécommunication comprenant une base isolante (32), des broches de ligne (40, 42, 44, 46) sortant de ladite base, une borne de ligne (48, 50) connectée électriquement aux-dites broches de ligne, une borne supplémentaire (58), une broche de terre (56) connectée à ladite borne supplémentaire, ladite broche de terre sortant également de ladite base, ladite broche de terre et ladite borne supplémentaire étant isolées électriquement de ladite borne de ligne et desdites broches de ligne, un parafoudre à tube à gaz (20) comprenant une électrode de ligne (22, 24) et une électrode de terre (26) qui en est espacée pour définir un intervalle d'amorçage primaire, ladite électrode de ligne étant connectée électriquement à ladite borne de ligne et ladite électrode de terre étant connectée électriquement à ladite borne supplémentaire, un contact de terre (78) s'appuyant sur ladite base et en contact électrique avec ladite broche de terre, caractérisé par un dispositif d'isolement (86, 88) définissant un espace entre un partie (52, 54) de ladite borne de ligne qui est en toute proximité de ladite base et dudit contact de terre (78), le dispositif d'isolement étant une structure en feuilles recouvrant ledit contact de terre et disposée contre ladite base, et comprenant des perforations (92, 94) dans lesquelles in intervalle d'amorçage secondaire (28, 30) est formé entre ladite partie terminale et ledit contact de terre, lesdites broches de ligne faisant saillie par ledit dispositif d'isolement et serrant également ladite borne de ligne, ledit dispositif d'isolement et ledit contact de terre sur ladite base et ledit intervalle d'amorçage secondaire étant un intervalle d'air avec une tension d'amorçage nominale qui est supérieure à la tension d'amorçage de l'intervalle d'amorçage primaire mais inférieure à la tension d'amorçage de l'intervalle d'amorçage primaire si le gaz a fuit dudit tube à gas.

2. Protecteur de ligne selon la revendication 1, dans lequel ledit dispositif d'isolement consiste en deux feuilles (86, 88) de matière isolante, chacune des deux feuilles comportant une perforation, les perforations avant des dimensions différentes et constituant lesdites perforations.

3. Protecteur de ligne selon l'une quelconque des revendications 1 et 2, dans lequel ladite borne a une forme générale en L et ladite partie de borne étant la partie de bas du L.

4. Protecteur de ligne selon l'une quelconque des revendications 1 à 3, dans lequel ladite base comporte une fente (66) pour recevoir ledit contact de terre et ladite broche de terre comporte une partie dans ladite fente pour la connexion électrique avec ledit contact de terre.

FIG.1.

FIG.2.

FIG.3.

FIG.7.

FIG.4.

FIG.5.

FIG.6.